# EUROPEAN PATENT APPLICATION

(11) **EP 4 841 134 A1**
(43) Date of publication of application: **18.11.2026**
(21) Application number: 25175882.7
(22) Date of filing: 13.05.2025
(51) Int. Cl.: F16H 63/30, F16C 35/00

(54) **GEAR BOX ACTUATOR ASSEMBLY FOR A VEHICLE, IN PARTICULAR UTILITY VEHICLE, GEAR BOX ACTUATOR, ELECTRONICALLY SHIFTABLE AXLE, AUTOMATED MANUAL TRANSMISSION SYSTEM, VEHICLE AND METHOD**

(71) Applicant: ZF CV Systems Global GmbH, 3006 Bern (CH)
(72) Inventor: SALIK, Jakub, 53-306 Wroclaw (PL)
(74) Representative: Rabe, Dirk-Heinrich

(57) **Abstract**

Gear box actuator assembly (100) for a vehicle (200a), in particular utility vehicle (200b); wherein the gear box actuator assembly (100) comprises a housing part (110); the gear box actuator assembly (100) comprises a push rod (211) of a shift fork (212); the gear box actuator assembly (110) comprises a bearing bracket (120) for mounting the push rod (211) to rotate around an axis (A); the housing part (110) comprises a mounting section (111); and the bearing bracket (120) is adapted to be mounted to the housing part (110) at the mounting section (111); wherein the bearing bracket (120) and the housing part (110) are adapted to guide a sliding movement of the bearing bracket (120) along the axis (A) to the mounting section (111).

## Description

The disclosure relates to a gear box actuator assembly for a vehicle, in particular utility vehicle. The disclosure also relates to a gear box actuator for a vehicle, in particular utility vehicle, to an electronically shiftable axle for a vehicle, in particular utility vehicle, to an automated manual transmission system for a vehicle, in particular utility vehicle, to a vehicle, in particular utility vehicle, and to a method for mounting a gear box actuator assembly.

An automated manual transmission, AMT, system, also called semi-automatic transmission, is known in the prior art. An AMT system is generally lighter than an automatic transmission so that a vehicle with an AMT system may increase the payload by having less total vehicle weight. Such an AMT system comprises a gear box actuator to shift gears, which may enhance the shifting performance compared to a manual transmission. This system allows for the benefits of manual transmission, such as fuel efficiency and driver control, while providing the convenience of an automatic transmission by reducing the need for manual gear changes.

Gear box actuators are known in the prior art. Such a gear box actuator comprises a so-called shift fork to select gears. The shift fork may be shiftable along an axis and maybe adapted to rotate around the axis. To achieve a rotatable mounting of the shift fork, the shift fork comprises and/or is mechanically fixated to a push rod. The gear box actuator assembly comprises a bearing to rotatably mount the push rod so that the shift fork may rotate. The bearing may be comprised and/or provided by a bearing bracket that is mounted to a body of the gear box actuator.

EP 3 976 995 A1 relates to a semi-automatic transmission for a motor vehicle, said transmission comprising a transmission housing which has a detachable cover on which a transmission shifting unit is located, wherein the transmission shifting unit has actuators for actuating shift forks associated with each of said actuators, and wherein in each case an associated sliding sleeve of the semi-automatic transmission can be displaced coaxially with respect to a transmission shaft by means of each shift fork.

The rotatable mounting may be demanding, since constructive space within the gear box actuator is limited and requirements for tolerances are to be met to achieve a smooth and efficient shifting and/or selecting of gears.

It is known that, for providing a specific tolerance, the bearing bracket comprises pins which are adapted to project, in the mounted position, into blind holes of the body of the gear box actuator. Thus, the arrangement of the pins and of the blind holes define a specific position of the bearing bracket. To mount the bearing bracket to the body, it is known to move the push rod axially so that the bearing bracket may be mounted by arranging the bearing bracket perpendicular to axial direction so that the pins project into the blind holes. However, this solution requires a certain amount of constructive space to move the push rod so that the bearing bracket can be mounted.

In the light of the prior art, it is an object of the disclosure to provide a contribution to the prior art. In particular, an object of the disclosure is to provide a gear box actuator assembly with an improved usage of construction space and required features for a tolerance chain.

The object is solved by the subject-matter according to independent claim 1 and according to the remaining independent claims. Dependent claims relate to preferred embodiments.

According to an aspect of the present disclosure, a gear box actuator assembly for a vehicle, in particular utility vehicle, is provided; the gear box actuator assembly comprises a housing part; the gear box actuator assembly comprises a push rod of a shift fork; the gear box actuator assembly comprises a bearing bracket for mounting the push rod to rotate around an axis; the housing part comprises a mounting section; and the bearing bracket is adapted to be mounted to the housing part at the mounting section; wherein the bearing bracket and the housing part are adapted to guide a sliding movement of the bearing bracket along the axis to the mounting section.

It is realized that it is possible to achieve a required tolerance chain and a constructive space effective assembly by enabling a guided and sliding movement of the bearing bracket along the axis to the mounting section. Therein, the sliding movement of the bearing bracket is guided by the housing part and the bearing bracket. The housing part defines a mounting position for the bearing bracket at the mounting section to achieve the required tolerance. The sliding movement along the axis achieves that the push rod, may not be shifted for mounting the bearing bracket, i.e., shifting of the push rod for mounting the bearing bracket may be dispensed with. The bearing bracket may thus be assembled by moving the bearing bracket along the axis and along the push rod while the arrangement of the push rod may remain unaffected by mounting the bearing bracket. Thus, moving the bearing bracket perpendicular to the axis may be dispensed with. In other words, the bearing bracket may be mounted even if the push rod is mounted to the gear box actuator. This may be achieved by the sliding movement of the bearing bracket along the axis. This may save constructive space and enhance the assembly of the gear box actuator assembly. It is realized that the bearing of the push rod of the shift fork is an application in which constructive space is particularly limited. Thus, enabling to mount the bearing bracket by a guided sliding movement of the bearing bracket along the axis uses the constructive space efficiently.

Optionally, the housing part comprises one or more grooves; and the grooves are extended parallel to the axis for slidably moving the bearing bracket along the axis to the mounting section. The one or more grooves achieve effectively and reliably that the bearing bracket may be slidably moved along the axis to the mounting section. In particular with at least two grooves may be achieved that the bearing bracket is rotatably fixed by the grooves. The grooves are principally extended parallel to the axis to define the guided sliding movement of the bearing bracket for mounting the bearing bracket at the mounting section.

Optionally, the one or more grooves is axially subdivided into groove sections; and the groove sections are distantly arranged from each other. It is realized that subdividing the grooves into distantly arranged groove sections is sufficient for a reliable positioning of the bearing bracket and mounting section and that a subdivision of the grooves may enhance constructive possibilities around the mounting section and around the grooves.

Optionally, the bearing bracket comprises one or more guiding members; and the guiding members are adapted to project into at least one of the one or more grooves. The guiding members achieve that the grooves may particularly reliably and efficiently guide a sliding movement of the bearing bracket. The guiding members project perpendicular to the axis into the grooves.

Optionally, the guiding members comprise pins and/or ribs. Pins may be efficiently manufactured and provide a sufficient guidance of the bearing bracket in the grooves. Alternatively or additionally, the guiding members comprise ribs which may project into the grooves for guiding the bearing bracket.

Optionally, a number of grooves and/or groove sections equals a number of guiding members. Those energies that each of the guiding members may project into one of the grooves and/or in one of the groove sections.

Optionally, the mounting section comprises a support surface; the bearing bracket comprises a contact surface; and the contact surface is, in a mounted state, supported by the support surface. Supporting the contact surface and thus the bearing bracket by the support surface provides a well-defined support of the bearing bracket at the mounting section.

Optionally, each of the mounting section and the bearing bracket comprises holes; the gear box actuator assembly comprises fastening members projecting through and/or into the holes to fixate the bearing bracket at the mounting section. The fastening members, for example screws, may in the end fixate the bearing bracket at the mounting section.

Optionally, the bearing bracket is adapted to be translationally moved along the push rod to the mounting section. Therein, the translational movement of the bearing bracket is guided by the body of the gear box actuator assembly.

According to an aspect of the disclosure, a gear box actuator for a vehicle, in particular utility vehicle, is provided; wherein the gear box actuator comprises the gear box actuator assembly according to the disclosure. Optionally, the gear box actuator assembly comprises one or more optional features as described with reference to the gear box actuator assembly to achieve the corresponding technical effect.

The gear box actuator may also be referred to as drive train actuator and/or vehicle transmission actuator. In addition to the gear box actuator assembly, the gear box actuator may comprise further components, e.g., an electronic control unit, sensors, sealing members and/or housing and/or fastening members.

According to an aspect of the disclosure, an electronically shiftable axle for a vehicle, in particular utility vehicle, is provided; wherein the electronically shiftable axle comprises the gear box actuator assembly according to the disclosure and/or the gear box actuator according to the disclosure. Optionally, the gear box actuator assembly and/or the gear box actuator comprises one or more optional features to achieve the corresponding technical effect.

An electronically shiftable axle according to the disclosure may be an axle configuration in which the shifting mechanism is controlled electronically, enabling the selective engagement or disengagement of the axle based on electronic signals and performed by the gear box actuator. This allows for more precise and efficient vehicle control and performance adjustments.

According to an aspect of the disclosure, an automated manual transmission system of a vehicle, in particular utility vehicle, is provided, comprising the gear box actuator assembly according to the disclosure, the gear box actuator according to the disclosure and/or the electronically shiftable axle according to the disclosure. Optionally, the gear box actuator assembly, the gear box actuator and/or the electronically shiftable axle comprises one or more optional features to achieve the corresponding technical effect.

The automated manual transmission system may comprise one or more of the electronically shiftable axles and optionally a central control interface.

According to an aspect of the disclosure, a vehicle, in particular utility vehicle, is provided; wherein the vehicle, in particular utility vehicle, comprises the gear box actuator assembly according to disclosure, the gear box actuator according to disclosure, the automated manual transmission system according to disclosure and/or the electronically shiftable axle according to disclosure. Optionally, the gear box actuator assembly and/or the gear box actuator comprises one or more optional features to achieve the corresponding technical effect.

According to an aspect of the disclosure, a method for mounting a gear box actuator assembly according to the disclosure is provided; wherein the method comprises: providing the housing part and the push rod of the gear box actuator assembly; providing the bearing bracket of the gear box actuator assembly; arranging the bearing bracket by sliding the bearing bracket along the axis to the mounting section; and mounting the bearing bracket to the housing part at the mounting section. Optionally, the gear box actuator assembly comprises one or more optional features as described with reference to the gear box actuator assembly to achieve the corresponding technical effect.

Further advantages and technical features and their technical effects are disclosed in the figures and the description thereof.

The figures show preferred embodiments as follows:
Fig. 1 a schematic of a vehicle, in particular utility vehicle, according to an embodiment of the disclosure;
Fig. 2 a detail of a gear box actuator assembly according to the prior art;
Fig. 3 a detail of a gear box actuator assembly according to the prior art;
Fig. 4 a detail of a gear box actuator assembly according to an embodiment of the disclosure;
Fig. 5 a detail of a gear box actuator assembly according to an embodiment of the disclosure; and
Fig. 6 a schematic of a method according to an embodiment of the disclosure.

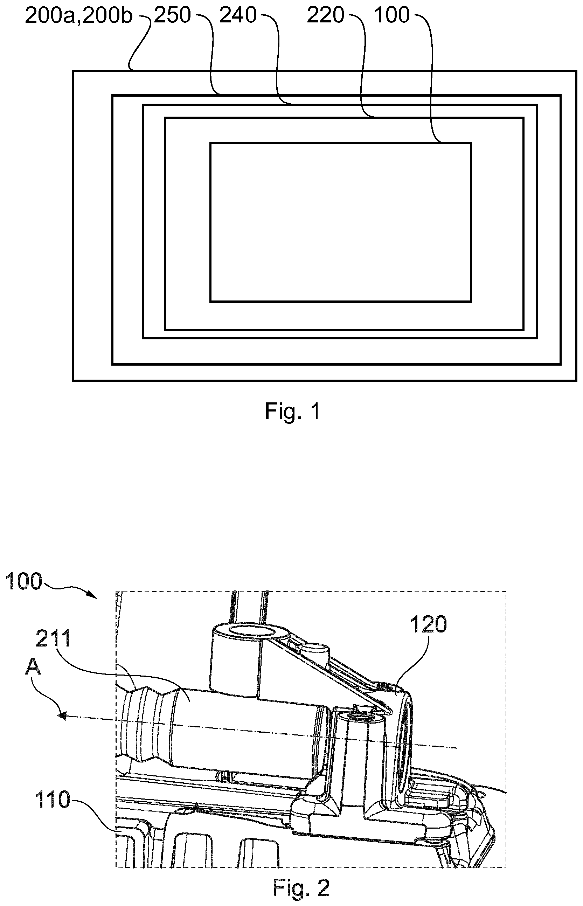

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck and/or towing vehicle of a vehicle combination, a bus and/or a passenger car.

The vehicle 200a, 200b comprises an automated manual transmission system 250. The automated manual transmission system 250 combines the mechanical components of a traditional manual transmission with electronic controls to automate gear shifting.

The automated manual transmission system 250 comprises an electronically shiftable axle 240. The electronically shiftable axle 240 may be configured as an axle of the vehicle 200a, 200b. One or more axles of the vehicle 200a, 200b may be configured as such an electronically shiftable axle 240.

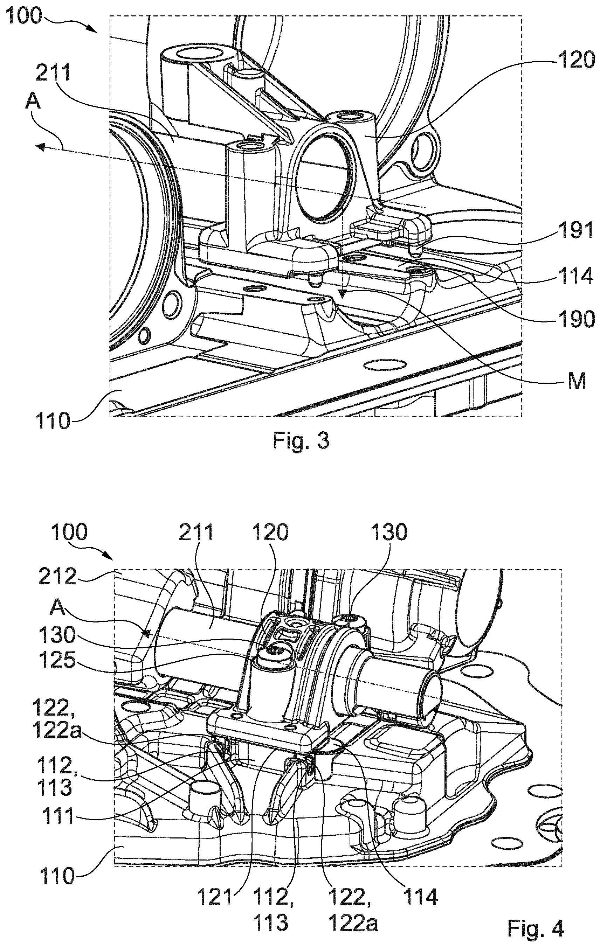

The electronically shiftable axle 240 comprises a gear box actuator 200. The gear box actuator 220 according to the disclosure is an electromechanical and/or hydraulic device used to engage and disengage gears within a transmission system. The gear box actuator 220 is responsible for the precise and reliable control of the gearbox mechanism, enabling smooth shifting of gears. For shifting of gears, the gear box actuator 200 comprises one or more shift forks 212 (see Figure 4).

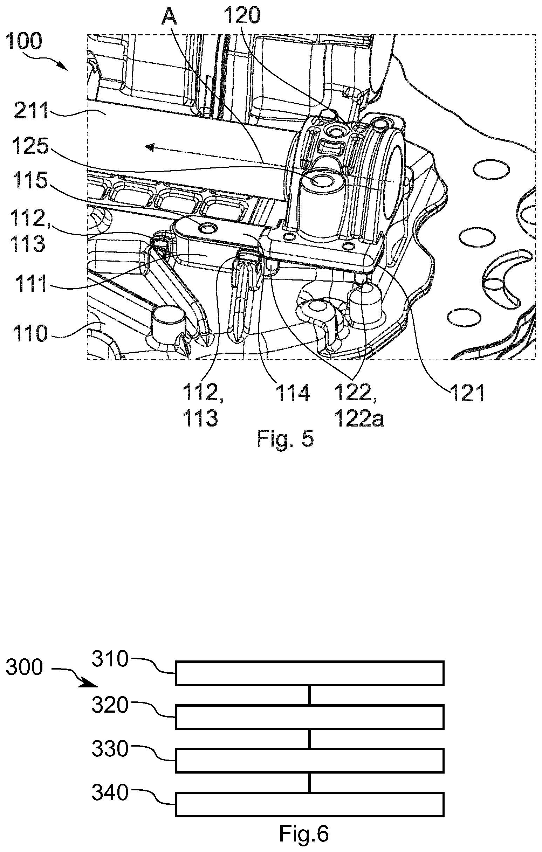

The gear box actuator 220 comprises a gear box actuator assembly 100. Features of the gear box actuator assembly 100 and further features of the gearbox actuator 220, of the electronically shiftable axle 240 and of the automated manual transmission system 250 are described with reference to Figures 4 and 5.

Figure 2 shows a detail of a gear box actuator assembly 100 according to the prior art.

The gear box actuator assembly 100 comprises a body 110 and a bearing bracket 120. Figure 2 further illustrates a push rod 211. The push rod 211 is adapted to rotate around an axis A. The push rod 211 is shifted along the axis A to enable that the bearing bracket 120 may be mounted to the body 110. This is further described with reference to Figure 3.

Figure 3 shows a detail of a gear box actuator assembly 100 according to the prior art. The gear box actuator assembly 100 of Figure 3 is the gear box actuator assembly 100 of Figure 2. Figure 3 is described under reference to Figure 2. The body 110 comprises a contact surface 114 at which the bearing bracket 120 is to be mounted. The body 110 comprises blind holes 190 and the bearing bracket 120 comprises pins 191. To insert the pins 191 to the blind holes 190, the bearing bracket 120 is to be moved along a mounting direction M. The mounting direction M is perpendicular to the axis A. Thus, to mount the bearing bracket 120, the push rod 211 is to be shifted. Each of the pins 191 and the blind holes 190 comprises a circular cross-section to achieve a well-defined arrangement of the bearing bracket 120 at the body 110.

Each of Figures 4 and 5 shows a detail of a gear box actuator assembly 100 according to an embodiment of the disclosure. The gear box actuator assembly 100 of Figures 4 and 5 is a gear box actuator assembly 100 for a vehicle 200a, in particular utility vehicle 200b. Such a vehicle 200a, 200b and features of such a gear box actuator assembly 100 are described with reference to Figure 1. Figures 4 and 5 are described under reference to Figure 1. Figures 4 and 5 illustrate features of the gear box actuator assembly 100 and features of a method 300 for mounting the gear box actuator assembly 100. Figures 4 and 5 are described in conjunction with each other.

The gear box actuator assembly 100 of Figures 4 and 5 comprises a housing part 110. The housing part 110 may be a part of a housing of the gear box actuator 220.

The gear box actuator assembly 100 comprises the push rod 211. The push rod 211 is a push rod 211 of a shift fork 212 of the gear box actuator 220. The push rod 211 is mounted to the housing part 110. The push rod 211 is adapted to rotate around an axis A. The axis A defines a rotational axis of the push rod 211. The push rod 211 is adapted to be shifted, i.e., moved, along the axis A.

The gear box actuator assembly 110 comprises a bearing bracket 120 for mounting the push rod 211. The bearing bracket 120 comprises a bushing and/or a bearing (not shown) for rotatably mounting the push rod 211.

The housing part 110 comprises a mounting section 111. The mounting section 111 is adapted to fixate the bearing bracket 120 in a well-defined position. The bearing bracket 120 is adapted to be mounted to the housing part 110 at the mounting section 111.

The bearing bracket 120 and the housing part 110 are adapted to guide a sliding movement of the bearing bracket 120 along the axis A to the mounting section 111 (see also Figure 5). Thus, the bearing bracket 120 is adapted to be translationally moved along the axis A for moving the bearing bracket 120 to the mounting section 111. The bearing bracket 120 is adapted to be translationally moved along the push rod 211 to the mounting section 111.

The housing part 110 comprises a pair of grooves 112 (in the shown perspective, one of the grooves 112 is covered by the push rod 211). Alternatively, the housing part 100 comprises one or more than two grooves 112 (not shown).

The grooves 112 are extended parallel to the axis A for slidably moving the bearing bracket 120 along the axis A and along the push rod 211 to the mounting section 111. The extension of the grooves 112 defines a direction of a translational movement of bearing bracket 120. The grooves 112 are axially subdivided into groove sections 113; and the groove sections 113 are distantly arranged from each other. In other words, the groove sections 113 are along the axis A distantly arranged.

The bearing bracket 120 comprises four guiding members 122; and the guiding members 122 are adapted to project into the grooves 112. In the mounted state, the guiding members 122 project into the groove sections 113. Therein, each of the guiding members 122 project into one of the groove sections 113. The number of groove sections 113 equals the number of guiding members 112. In another embodiment (not shown), the number of guiding members 122 may be different.

The guiding members 122 comprise pins 122a. In another embodiment (not shown), the guiding members comprise ribs and the ribs are adapted to project into the grooves 112.

The mounting section 111 comprises a support surface 114. The bearing bracket 120 comprises a contact surface 121. The contact surface 121 is, in a mounted state, supported by the support surface 114.

Each of the mounting section 111 and the bearing bracket 120 comprises holes 115, 125. The gear box actuator assembly 100 comprises fastening members 130 projecting through and/or into the holes 115, 125 to fixate the bearing bracket 120 at the mounting section 111. The fastening members 130 are screws.

Figure 6 shows a schematic of a method 300 according to an embodiment of the disclosure. The method 300 of Figure 6 is a method 300 for mounting a gear box actuator assembly 100. Such a gear box actuator assembly 100 is described under reference to Figures 1, 4 and 5. Figure 6 is described under reference to Figures 1, 4 and 5.

The method 300 of Figure 6 comprises: providing 310 the housing part 110 and the push rod 211 of the gear box actuator assembly 100.

The method 300 comprises: providing 320 the bearing bracket 120 of the gear box actuator assembly 100.

The method 300 of Figure 6 comprises: arranging 330 the bearing bracket 120 by sliding the bearing bracket 120 along the axis A to the mounting section 111.

The method 300 of Figure 6 comprises: mounting 340 the bearing bracket 120 to the housing part 110 at the mounting section 111.

### List of reference signs (Part of the describtion)

- 100: gear box actuator assembly
- 110: housing part
- 111: mounting section
- 112: groove
- 113: groove section
- 114: support surface
- 115: hole
- 120: bearing bracket
- 121: contact surface
- 122: guiding members
- 122a: pin
- 125: hole
- 130: fastening members
- 190: blind hole
- 191: pin
- 200a: vehicle
- 200b: utility vehicle
- 211: push rod
- 212: shift fork
- 220: gear box actuator
- 240: electronically shiftable axle
- 250: automated manual transmission system
- 300: method
- 310: providing the housing part
- 320: providing the bearing bracket
- 330: arranging
- 340: mounting
- A: axis
- M: mounting direction

## Claims

1. Gear box actuator assembly (100) for a vehicle (200a), in particular utility vehicle (200b); wherein
- the gear box actuator assembly (100) comprises a housing part (110);
- the gear box actuator assembly (100) comprises a push rod (211) of a shift fork (212);
- the gear box actuator assembly (110) comprises a bearing bracket (120) for mounting the push rod (211) to rotate around an axis (A);
- the housing part (110) comprises a mounting section (111); and
- the bearing bracket (120) is adapted to be mounted to the housing part (110) at the mounting section (111); wherein
- the bearing bracket (120) and the housing part (110) are adapted to guide a sliding movement of the bearing bracket (120) along the axis (A) to the mounting section (111).

2. Gear box actuator assembly (100) as claimed in claim 1; wherein
- the housing part (110) comprises one or more grooves (112); and
- the grooves (112) are extended parallel to the axis (A) for slidably moving the bearing bracket (120) along the axis (A) to the mounting section (111).

3. Gear box actuator assembly (100) as claimed in claim 2; wherein
- the one or more grooves (112) is axially subdivided into groove sections (113); and
- the groove sections (113) are distantly arranged from each other.

4. Gear box actuator assembly (100) as claimed in claim 2 or 3; wherein
- the bearing bracket (120) comprises one or more guiding members (122); and
- the guiding members (122) are adapted to project into at least one of the one or more grooves (112).

5. Gear box actuator assembly (100) as claimed in claim 4; wherein
- the guiding members (122) comprise pins (122a) and/or ribs.

6. Gear box actuator assembly (100) as claimed in claim 4 or 5; wherein
- a number of grooves (112) and/or groove sections (113) equals a number of guiding members (112).

7. Gear box actuator assembly (100) as claimed in claim any one of the preceding claims; wherein
- the mounting section (111) comprises a support surface (114);
- the bearing bracket (120) comprises a contact surface (121); and
- the contact surface (121) is, in a mounted state, supported by the support surface (114).

8. Gear box actuator assembly (100) as claimed in claim any one of the preceding claims; wherein
- each of the mounting section (111) and the bearing bracket (120) comprises holes (115, 125);
- the gear box actuator assembly (100) comprises fastening members (130) projecting through and/or into the holes (115, 125) to fixate the bearing bracket (120) at the mounting section (111).

9. Gear box actuator assembly (100) as claimed in any one of the preceding claims; wherein
- the bearing bracket (120) is adapted to be translationally moved along the push rod (211) to the mounting section (111).

10. Gear box actuator (220) for a vehicle (200a), in particular utility vehicle (200b); wherein the gear box actuator (220) comprises the gear box actuator assembly (100) as claimed in any one of the preceding claims.

11. Electronically shiftable axle (240) for a vehicle (200a), in particular utility vehicle (200b); wherein the electronically shiftable axle (240) comprises the gear box actuator assembly (100) as claimed in any one claims 1 to 9 and/or the gear box actuator (220) as claimed in claim 10.

12. Automated manual transmission system (250) of a vehicle (200a), in particular utility vehicle (200b), comprising the gear box actuator assembly (100) as claimed in any one of claims 1 to 9, the gear box actuator (220) as claimed in claim 10 and/or the electronically shiftable axle (240) as claimed in claim 11.

13. Vehicle (200a), in particular utility vehicle (200b); wherein the vehicle (200a), in particular utility vehicle (200b), comprises the gear box actuator assembly (100) as claimed in any one of claims 1 to 9, the gear box actuator (220) as claimed in claim 10, the electronically shiftable axle (240) as claimed in claim 11 and/or the automated manual transmission system (250) as claimed in claim 12.

14. Method (300) for mounting a gear box actuator assembly (100) as claimed in any of claims 1 to 9; wherein the method (300) comprises:
- providing (310) the housing part (110) and the push rod (211) of the gear box actuator assembly (100);
- providing (320) the bearing bracket (120) of the gear box actuator assembly (100);
- arranging (330) the bearing bracket (120) by sliding the bearing bracket (120) along the axis (A) to the mounting section (111); and
- mounting (340) the bearing bracket (120) to the housing part (110) at the mounting section (111).
